# EUROPEAN PATENT APPLICATION

(11) **EP 1 332 797 A1**
(43) Date of publication of application: **06.08.2003**
(21) Application number: 02380139.2
(22) Date of filing: 28.06.2002
(51) Int. Cl.: B03B 9/06

(54) **Installation for recycling material from demolition or collection**

(30) Priority: 31.01.2002 ES 200200232
(71) Applicant: Talleres ZB, S.A., 20100 Renteria, Guipuzcoa (ES)
(72) Inventor: González, José Angel Arrieta, 20100 Renteria (Guipuzcoa) (ES)
(74) Representative: Urizar Anasagasti, José Antonio

(57) **Abstract**

Demolition or collection material recycling facility, composed by a pre-screening feeder (1) in which the raw material is introduced and which acts as a dispenser upon a crushing mill for the recycling of material from demolition or collection (2) able to demolish, cleanly reduce the material to be recycled to its minimal size, by means of a rotating hammer rotor. After passing below a magnetic conveyor belt (8) where the ferric components are extracted, the material reaches a reversible belt from which, if the percentage of the materials not recoverable for construction is high, they are sent to a rotary trommel (3) where they are separated, and those of size greater than 60 mm pass to a sorting (6) for their selection and stocking. If smaller, the material passes onto a vibratory screen (4) where according to dimension, they are returned to the mill, sent to a cascade cyclone (5) or to another vibratory feeder located at the exit of the cyclone. The cascade cyclone (5) separates light components like plastics or wood from the material to be re-used.

## Description

The object of the present invention consists of a novel recycling process for material originating from demolition or collection for its posterior use.

The component originating from recycling is of poor quality nowadays, since the treatment undergone by the material to be recovered is a simple process, which does not purify at the utmost the mixture of components that are present in the collection. This way, at the end of the recovery process, metallic elements, plastic materials, wooden materials, etc. are obtained, which require a further treatment in order to become reusable.

Concrete originating from demolition presents screws, crimping ridge ribs, bars of steel and, in currently existing processes, the extraction is performed in such a way that the ferric material it produces is partially covered with concrete conglomerates, which makes it of poorer quality.

In the same way, some kinds of ferric materials, like bars or rods, are recovered in too big a size for easy piling up or transportation.

All these currently existing drawbacks disappear when using the demolition or collection recycling facility object of this utility patent.

The treating process for demolition and recycling material is original, since never before any facility has been designed for this purpose with all the units that compose it.

With this invention, a recycling ready product of better quality is obtained, so that the product that will be made starting from this recovered component will be of better quality as well.

The extracted product is a clean compound and is free of foreign components that might be detrimental to its re-use in mixtures.

In the same way, with this procedure, an impurity-free ferric material of minimal size is obtained, since it is triturated and broken down in its most simple elements when undergoing a continuous crushing treatment.

The novelty of the facility resides mainly in the use of two elements which are similar to those used in other fields, but have never been used in the concrete or aggregates material recycling sector. One is a Crushing Mill of the kind of those used for crumbling material proceeding from demolition or collection for their posterior recycling and the other is a cascade cyclone unit, of the kind of those used in sectors like metal scrap.

The nature of the facility object of the present memory may be better understood with the help of the drawing enclosed at the end of the present document.

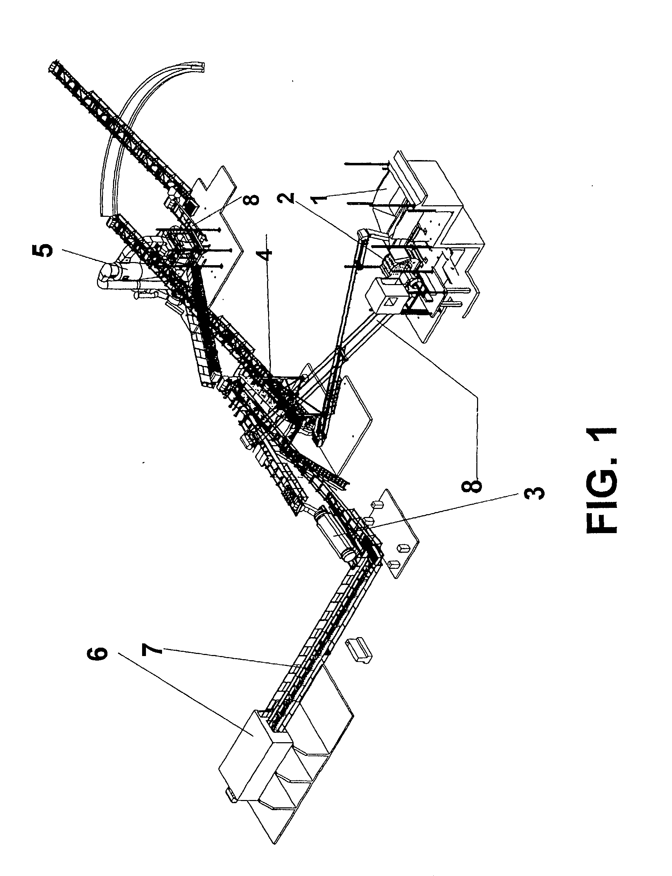

Fig.1- Demolition or collection material recycling facility.

As can be seen in the drawing, there are several units like, in the first place, the Pre-screening Feeder (1), which consists of a metallic hopper that rests on a fixed frame in which the demolition or collection material that has to be recycled is deposited. All the material that has to be gathered is unloaded on this feeder, which in turn is mainly responsible for dosing the amounts of material to be introduced in the next stations, and performs a separation by size of the materials greater and smaller than 50 mm.

Connected to the feeder (1) the "Crushing mill for the recycling of demolition and collection material" (2) can be found, which consists of an upper carcass made of alloy steel resistant to impacts and abrasion, and a lower carcass of the same material, both separable through two hydraulic cylinders. In its interior, the mill presents a rotor that turns about a main spindle and formed by a series of antiwear discs perpendicular to the spindle, and interconnected through passing shafts that are parallel to the main spindle. These shafts bear a series of solid rotating hammers, in such a way that between two discs there are two hammers placed on diametrically opposed shafts with respect to the main spindle, in order to maintain a correct levelling.

This system using a rotor with discs bearing special solid hammers solves the problem created in currently existing facilities: the ferric material that is obtained is concrete-free. Thanks to the high angular velocity at which the rotor rotates and the smashing capacity of the hammers, the aggregates that are obtained are of suitable size for their posterior re-use in the construction sector.

At present, in this field, rod crushing mills are used, among others, which triturate the material by means of beater bars that are assembled lengthways on the rotor and parallel to the main spindle, instead of hammers. This way, the crushing mill tends to get jammed when getting in contact with material that cannot be crushed, being unable to crush ferric material. The above does not occur with solid hammers since these rotate freely driven by their own weight and the rotation speed of the whole, hiding and coming out as a result of the angular velocity of the machine and of the impacts they provoke on the material that has to be crumbled.

This mill crushes the materials, producing the metallic elements in their most impurity-free state and in small sizes, so that their separation, collection and transport are easier. This does not occur with the current rod mills, since the impacts are less violent and constant.

On the bottom of the mill, there is a grid through which the crushed material passes, according to its size, to end up on an exit tray.

The material smaller than 50 mm may be sent to a conveyor belt, which evacuates the materials coming from the Crushing Mill (2), or may be sent to a stock.

The material greater than 50 mm is introduced in the Crushing Mill (2) to be crumbled.

The material that has been crushed by the mill (2) is collected by a vibratory feeder covered with interchangeable shields which leaves the material on a conveyor belt.

The "whole in one" coming from the crushing mill (2) passes below a magnetic belt (8) which removes the ferric particles that are deposited in a container installed below it.

The rest of the material is left at the end of the line on a reversible belt which introduces the material in different processes according to its nature. At this stage there are two possibilities:
- Should the percentage of materials not suitable for re-use in the construction sector be high, the material is sent to the rotary trommel (3), which performs a separation of the materials according to whether their size is greater than 60 mm or not through its mesh covered cylindrical walls. The material greater than 60 mm, crosses the cylinder axially and gets unloaded on a conveyor belt that sends it to the Manual Sorting Box (6) where the material is selected and separated for storage according to its features. As for the material smaller than 60 mm, once having crossed the mesh covered cylindrical walls of the rotary trommel (3), it falls onto the belt that transfers it to the two layer vibratory screen (4), where it passes through the same process as will be described next.
- Should the percentage of materials not suitable for use in the construction sector be low, the material available on the reversible conveyor belt gets unloaded on the vibratory screen (4) where sorting takes place into three categories: in the first case, when the size is minimal, approx. 0-8 mm., the material is left by means of a conveyor belt on a vibratory feeder located at the exit of the cascade cyclone. For slightly greater sizes, approximately 8-40 mm, the material is introduced in the cascade cyclone (5), which separates heavy materials (rocks) from light materials (plastics, woods, etc...) that may appear in the collection, by means of a counterflow air system. And finally, when the size is too big, the material is sent back to the crushing mill (2), establishing in this way a recovery closed-circuit.

The materials that are introduced into the cyclone (5), undergo a simple and efficient method for separating heavy materials from dusts and plastic debris, splinters, ..etc. The cyclone works in a counterflow way, in such a way that dust and light debris, like wood and sawdust are aspirated through an exhaustor of the crushed material whereas the heavier materials are recovered at the bottom in order to be stocked. The useless material is extracted through an alveolar valve and is deposited for piling up through a conveyor belt. The useful material is collected at the bottom of the cascade by the same vibratory feeder on which the minimal sized material had been left previously.

This useable material passes below a second magnetic belt (8) in order to prevent any intrusion of ferric material that would contaminate the compound, and is finally piled up for its recovery.

Once described the nature and functions of the invention, as well as one of its preferred embodiments, it only needs to be added that its design, its materials and its execution may suffer modifications, as long as these do not alter substantially the characteristics that are claimed in the next section.

## Claims

1. Demolition or collection material recycling facility, **characterised by** possessing among its operating units for the process a pre-screening Feeder (1), in which the raw material is introduced, that acts as a dispenser upon a Crushing mill (2) for the recycling of material coming from demolition or collection which works by means of an inner crushing hammers rotor, after which the material, after passing below a magnetic conveyor belt (8), from where the metallic components are extracted, reaches a reversible belt from which, in the event the percentage of materials not recoverable for construction is high, said materials are sent to a trommel (3) where they are separated, passing those of greater than 60 mm a size to a sorting (6) for their selection and stocking; if the size is smaller they pass onto a vibratory sscreen (4) where according to their dimension they either go back to the mill (2), go to a Cyclone cascade (5) able to separate components like plastics, wood and dust from the recyclable material, or go to another vibratory feeder located at the exit of the Cyclone (5).
